# EUROPÄISCHE PATENTSCHRIFT

(11) **EP 3 040 256 B1**
(45) Veröffentlichungstag und Bekanntmachung des Hinweises auf die Patenterteilung: **28.02.2018**
(21) Anmeldenummer: 15466023.7
(22) Anmeldetag: 22.12.2015
(51) Int. Cl.: B62D 25/18, B60T 5/00, F16D 65/847

(54) **RADKASTEN EINES KRAFTFAHRZEUGES**
WHEEL WELL OF A MOTOR VEHICLE
PASSAGE DE ROUE D'UN VEHICULE AUTOMOBILE

(30) Priorität: 30.12.2014 CZ 20140969
(43) Veröffentlichungstag der Anmeldung: 06.07.2016
(73) Patentinhaber: Skoda Auto a.s., 29301 Mladá Boleslav (CZ)
(72) Erfinder: Hrdlicka, Martin, 29301 Mladá Boleslav (CZ)

(56) Entgegenhaltungen:
- DE-A1- 10 159 783
- DE-A1-102008 039 728
- DE-A1-102008 052 938
- DE-A1-102011 007 126
- GB-A- 2 510 163

## Beschreibung

### Technisches Gebiet

Die Erfindung betrifft einen Radkasten des Kraftfahrzeuges, insbesondere einen Radkasten mit einer Friktionsbremse.

### Bisheriger Stand der Technik

Die Anforderungen auf passive Sicherheit bei Kraftfahrzeugen werden derzeit generell gesteigert, wobei ein der bedeutenden Elemente der passiven Sicherheit die gute und dauerhafte Bremswirkung ist. Diese wird durch die Verwendung von Bremsanlagen verschiedener Ausführung erzielt, wobei zu den Hauptmerkmalen der Bremsanlagen in meisten Fällen die Bremsscheibe gehört. Die Bremswirkung wird meistens durch das beiderseitige axiale Anpressen der Bremsbeläge erzielt. Infolge der starken Reibung zwischen den Bremsbelägen und der Bremsscheibe, z.B. beim intensiven Bremsvorgang bei der Fahrt bergabwärts, entsteht Wärmeenergie, die von der Masse der Bremsanlage aufgenommen wird. Falls die Temperatur eines der Teile der Bremsanlage die erlaubten Grenzwerte übersteigt, kann dies zur abrupten Reduzierung der Bremswirkung eventuell zum Aussetzen der Bremswirkung führen und nachfolgend sowohl die Fahrzeuginsassen, wie auch die Außenumgebung gefährden.

Damit solche oben genannte Probleme nicht vorkommen, muss eine Kühlung der Bremsanlage gewährleistet werden. Die primäre Kühlmaßnahme hängt mit der Anordnung in der Radfelge zusammen, wo durch natürliche Strömung infolge der Fahrzeugbewegung sowie der Rotation des Rades eine Kühlwirkung erreicht wird. Diese ist jedoch bei modernen Fahrzeugen mit hohem Gewicht, hoher Durchschnittsgeschwindigkeit und mit Maßnahmen zur Senkung des Luftwiderstandes des Fahrzeuges unzureichend.
Zur Verbesserung der Kühlwirkung ist die Verwendung eines Systems zur Nachkühlung durch Luftströmung bekannt, wo die Kühlluft aus der Außenumgebung durch Kanäle oder Halbkanäle aufgenommen und zur Bremsanlage gerichtet wird. Die angeführte Anordnung ist z.B. aus der Patentanmeldung DE 102012209980 A1 ersichtlich, wo die Kühlluft hinter dem Kühlergrill gesammelt und über ein Kanal zu der Bremsanlage geleitet wird. Die Patentschrift EP 0757642 B1 beschreibt eine Lösung, wo in dem Radkasten eventuell in seiner seitlichen Außenabdeckung Öffnungen mit Führungslamellen ausgebildet sind, um die Luftströmung zur Bremsanlage zu leiten. Eine weitere Radkastenlüftung ist durch die, in der DE102008052938 vorgesehenen Spalten in einer Radkastenabdeckung gezeigt. Die genannten Maßnahmen, basierend auf einer zusätzlichen Verstärkung der Außenluftzufuhr zur Bremsanlage, haben neben positiver Kühlwirkung auch einige Nachteile. Der erste Nachteil liegt in der Erhöhung des frontalen Luftwiderstandes des Fahrzeuges durch die Kühlluftzufuhr zur Bremsanlage, da die kühle Luft von der Einlassrichtung, die der Fahrtrichtung entspricht, in eine etwa rechtwinklig zur Fahrzeugachse liegende Richtung abgelenkt werden muss, wodurch das Fahrzeug einer Kräfteeinwirkung ausgesetzt wird, die den Luftwiderstandskoeffizient des Fahrzeuges verschlechtert, was sich in erhöhtem Kraftstoffverbrauch, reduzierter Höchstgeschwindigkeit und erhöhtem Schadstoffgehalt in Abgasen auswirkt. Den weiteren Nachteil stellt die erhöhte Verschmutzung der Funktionsstellen an Abschnitten der Bremsscheibe durch das Eintragen von Wasser und weiterer Schmutzpartikeln dar, die insbesondere beim Regen oder nach dem Regen in der Luft vor dem Fahrzeug stark enthalten sind.

### Darstellung der Erfindung

Die Aufgabe wird durch einen erfindungsgemäßen Radkasten eines Kraftfahrzeuges gelöst, das an beiden Seiten des Motorraumes mit unterer Motorabdeckung angeordnet ist, wobei der Radkasten aus einer Radschale und einer Seitenwand besteht, in der ein Ausschnitt ausgebildet ist, der den Motorraum mit dem Radkasten verbindet. Die Darstellung der Erfindung liegt darin, dass an dem Ausschnitt mit der Breite B ein abragendes vorderes Ohr sowie ein hinteres Ohr mit der Länge L angeordnet sind, die eine vorteilhafte viereckige Form mit einer Oberkannte und einer Unterkannte aufweisen, wobei das Verhältnis der Länge L zur Breite B ist L≥0,2B. Um die Kühlwirkung zu gewährleisten sind die Oberkanten des vorderen und hinteren Ohres mit einer Überdachung verbunden. Dies kann auch so erzielt werden, dass an der Unterkante des vorderen sowie des hinteren Ohres horizontale Blenden angeordnet sind, zwischen denen ein Spalt ist. Alternativ kann an der Unterkante des vorderen und hinteren Ohres eine abnehmbare Abdeckung oder ein schnabelförmiger Ausläufer angeordnet werden, der Bestandteil der unteren Motorabdeckung ist.

### Übersicht der Figuren der Zeichnungen

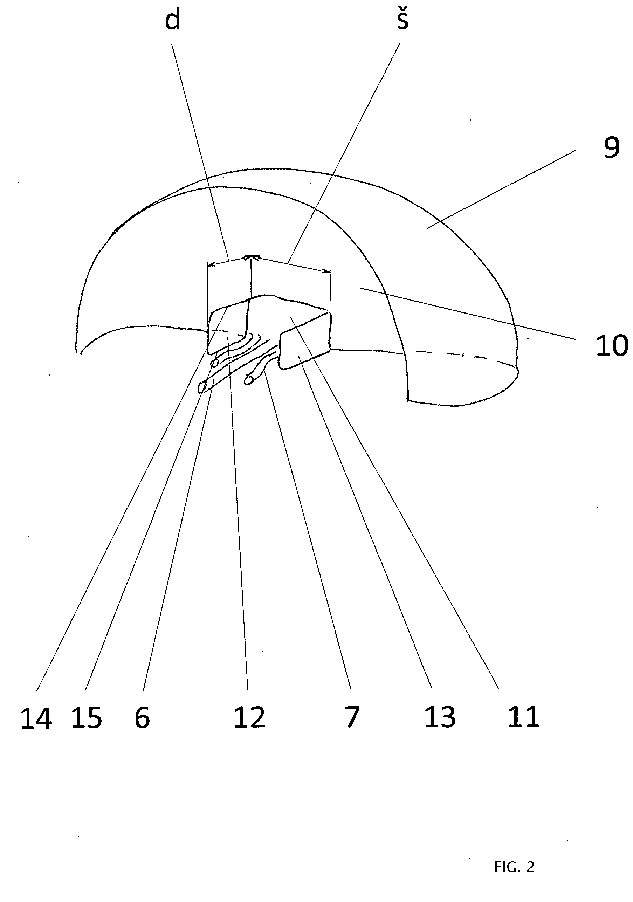

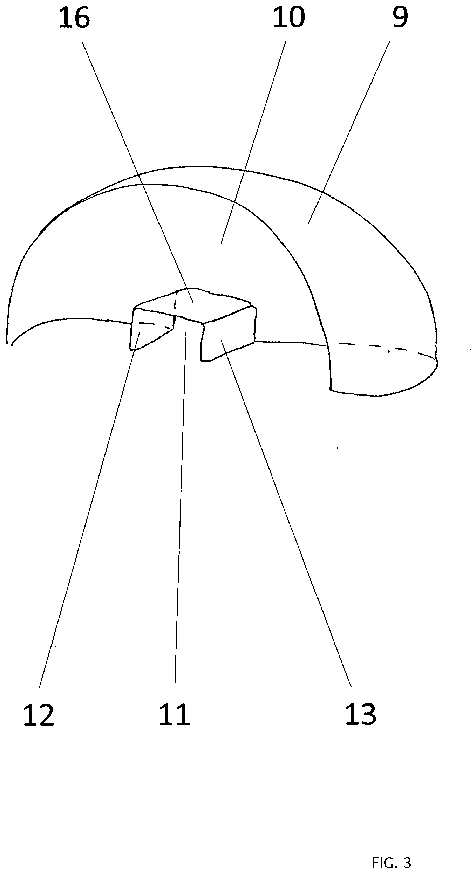

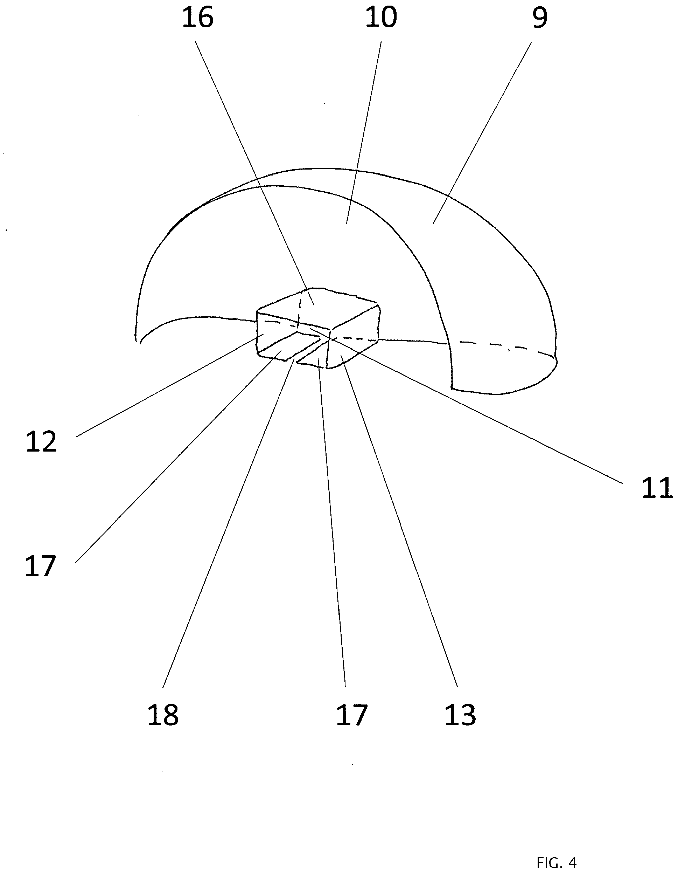

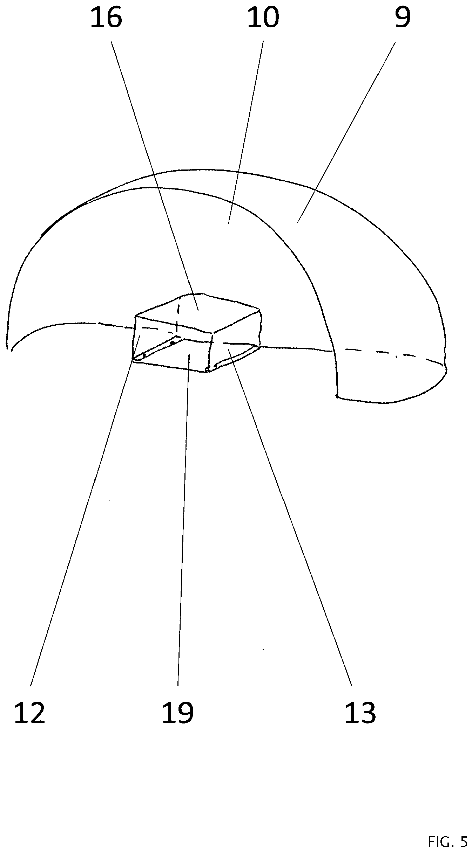

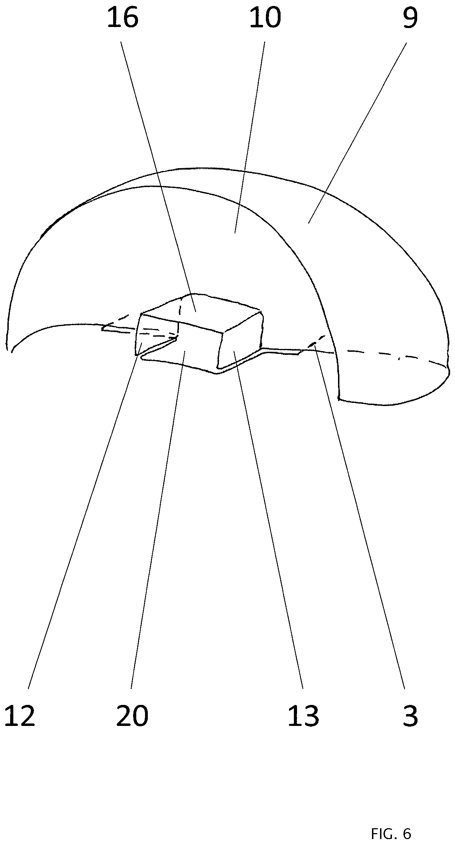

Die Erfindung wird näher anhand der Ausführungsbeispiele gemäß den beigefügten Zeichnungen erläutert, in denen die Fig. 1 schematisch eine Anordnung eines Motorraumes darstellt, die Fig. 2 eine perspektivische Ansicht eines Radkastens und die Fig. 3 bis 6 eine perspektivische Ansicht eines Radkastens in alternativen Ausführungen der Erfindung.

### Ausführungsbeispiel der Erfindung

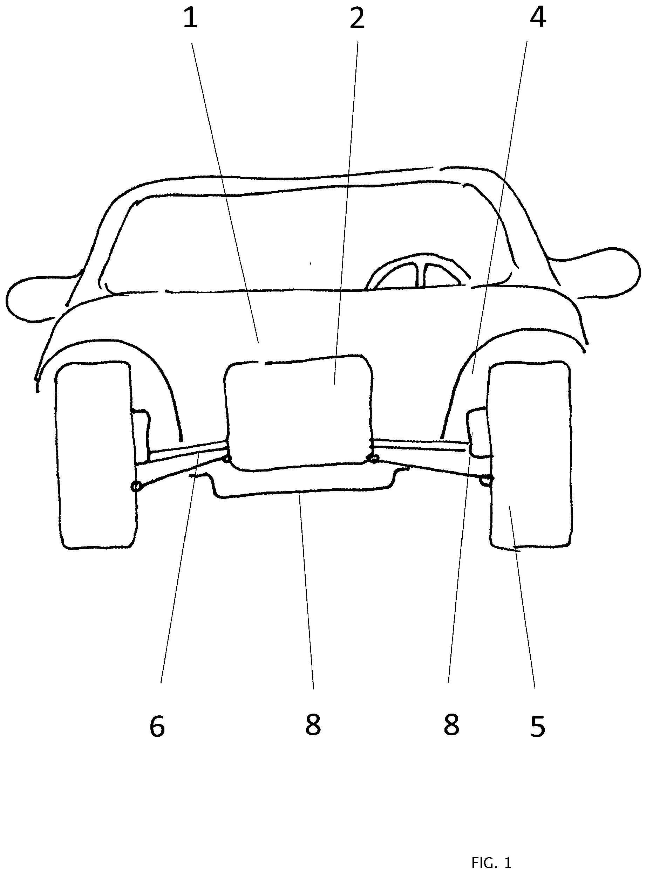

Die Fig. 1 stellt schematisch den vorderen Abschnitt eines Kraftfahrzeuges mit einem Motorraum 1 dar, der eine Antriebseinheit 2 umfasst und wo an jeder Seite des Motorraumes 1 ein Radkasten 4 angeordnet ist, in dem ein getriebenes Rad 5 des Fahrzeuges über eine Antriebswelle 6 an die Antriebseinheit 2 angeschlossen ist und eine Radaufhängung 7 umfasst. Das Antriebsrad 5 weist eine Bremsanlage 8 auf.

Der eigentliche Radkasten 4 wird gebildet durch eine Radschale 9 und eine Seitenwand 10. In der Seitenwand 10 ist ein Ausschnitt 11 ausgebildet, durch den die Radaufhängungen 7, eventuell die Antriebswelle 6 oder weitere (nicht dargestellte) mechanische Teile der Vorderachse durchgehen. Der Ausschnitt 11 hat die Breite B. Zum Ausschnitt 11 ist ein vorderes Ohr 12 und ein hinteres Ohr 13 befestigt, wobei beide Ohren 12, 13 eine Oberkante 14 und eine Unterkante 15 aufweisen. Beide Ohren 12, 13 haben die Länge L, wobei gilt, dass die Länge L des vorderen Ohres 12 und des hinteren Ohres 13 wenigstens 20% der Breite B des Ausschnitts 11 entspricht. Oberkanten 14, 14' des vorderen Ohres 12 und des hinteren Ohres 13 sind mit einer Überdachung 16 verbunden. In einer alternativen Ausführung weisen Unterkanten 15, 15' des vorderen Ohres 12 und des hinteren Ohres 13 horizontale Blenden 17 auf, zwischen denen ein Spalt 18 ist. In einer weiteren alternativen Ausführung können die Unterkanten 15, 15' der Ohren 12, 13 mit einer Abdeckung 19 verbunden werden, die als separates Teil ausgeführt ist oder durch einen schnabelförmigen Ausläufer 20, der Bestandteil der unteren Abdeckung 3 des Motorraumes 1 ist, gebildet wird.

Während der Fahrt des Kraftfahrzeuges dringt die anprallende Luft in den Motorraum 1 hinein, wo sich der statische Druck erhöht. So komprimierte Luft wird durch viele Öffnungen in der Karosserie in die Außenumgebung hinausgedrängt, solche Öffnungen stellen auch die Ausschnitte 11 in den Radkästen 4 dar. Die komprimierte Luft strömt aus dem Motorraum 1 durch die genannten Ausschnitte 4 und die Richtung sowie die Kompaktheit der ausgehenden Luftströmung wird durch die Einwirkung des vorderen Ohres 12 und des hinteren Ohres 13 stark intensiviert. Der Luftstrom wird durch diesen Einfluss nicht in chaotische Turbulenzen übergehen, sondern in einer Richtung stabilisiert, näher an die Räder 5 und zu der dort gelagerten Bremsanlage 8 geführt, wodurch die Kühlwirkung auf die Bremsanlage 8 deutlich erhöht wird. Die genannte Kühlwirkung wird weiter durch die Verbindung des vorderen und des hinteren Ohres 12, 13 mit einer Überdachung 16 gesteigert, was einerseits die Steifigkeit des Radkastens 4 erhöht und anderseits die Richtungsstabilität der Kühlluftströmung verbessert, die Homogenität dieser Strömung erhöht, was sich in einer Erhöhung der mittleren Strömungsgeschwindigkeit und dadurch auch in weiterer Steigerung der Kühlwirkung auswirkt. Dies kann auch durch die Schließung des Raumes zwischen dem vorderen Ohr 12 und dem hinteren Ohr 13 mittels horizontaler Blenden 17 erzielt werden, die zu diesen Ohren befestigt sind. Der Spalt 18 zwischen den horizontalen Blenden 17 ermöglicht ein einfaches Aufsetzen des Radkastens 4 am Kraftfahrzeug. Alternativ kann der Raum zwischen dem vorderen Ohr 12 und dem hinteren Ohr 13 im unteren Bereich durch eine separate Abdeckung 19 geschlossen werden, was z.B. ein zu den Ohren 12, 13 auf üblich bekannte Weise befestigtes Kunststoffteil sein kann. Für die Vereinfachung kann die Abdeckung 19 durch einen schnabelförmigen Ausläufer 20 ersetzt werden, der Bestandteil der unteren Abdeckung 3 des Motorraumes 1 ist.

Der Gebrauch des erfindungsgemäßen Radkastens 4 bringt eine Reihe von Vorteilen, zu den bedeutendsten gehört die deutliche Reduzierung der Wärmebelastung der vorderen Bremsanlage 4, z.B. beim andauernden Bremsen bei einer Fahrt mit geringerer Geschwindigkeit. Ferner ist es die Reduzierung der Verschmutzung der vorderen Bremsanlage 4 durch Wasser und Schmutzpartikel, da statt der verschmutzten Außenluft zu den Bremsen die vorgereinigte Luft aus dem Motorraum 1 zugeführt wird. Weiterer deutlicher Vorteil besteht in der Möglichkeit, die Abmessungen der die anprallende Außenluft zuführenden Kühlkanäle zu reduzieren oder diese völlig entfallen lassen und so den Luftwiderstand des Fahrzeuges reduzieren, was sich in einer Reduzierung des Kraftstoffverbrauches und des Schadstoffgehaltes in Abgasen auswirkt.

### Bezugszeichenliste

- 1.: Motorraum
- 2.: Antriebseinheit
- 3.: Untere Motorabdeckung
- 4.: Radkasten
- 5.: Antriebsrad
- 6.: Antriebswelle
- 7.: Radaufhängung
- 8.: Bremsanlage
- 9.: Radschale
- 10.: Seitenwand
- 11.: Ausschnitt
- 12.: vorderes Ohr
- 13.: hinteres Ohr
- 14.: Oberkante
- 15.: Unterkante
- 16.: Überdachung
- 17.: horizontale Blende
- 18.: Spalt
- 19.: Deckel
- 20.: Schnabel
- B: Breite
- L: Länge

## Patentansprüche

1. Radkasten (4) eines Kraftfahrzeuges, der an beiden Seiten eines Motorraumes (1) mit unterer Abdeckung (3) des Motorraumes (1) angeordnet ist, wobei der Radkasten (4) aus einer Radschale (9) und einer Seitenwand (10) besteht und in der Seitenwand (10) ein Ausschnitt (11) ausgebildet ist, der den Motorraum (1) mit dem Radkasten (4) verbindet, **dadurch gekennzeichnet, dass** an dem Ausschnitt (11) mit der Breite (B) ein abragendes vorderes Ohr (12) sowie ein hinteres Ohr (13) mit der Länge (L) angeordnet sind, die eine vorteilhafte viereckige Form mit einer Oberkante (14) und einer Unterkante (15) aufweisen, wobei das Verhältnis der Länge (L) zur Breite (B) ist L≥0,2B.

2. Radkasten (4) eines Kraftfahrzeuges nach Anspruch 1 **dadurch gekennzeichnet, dass** die Oberkante (14, 14') des vorderen Ohres (12) und des hinteren Ohres (13) mit einer Überdachung (16) verbunden sind.

3. Radkasten (4) eines Kraftfahrzeuges nach Anspruch 1 **dadurch gekennzeichnet, dass** an den Unterkanten (15, 15') des vorderen Ohres (12) und des hinteren Ohres (13) horizontale Blenden (17) mit einem Spalt (18) dazwischen angeordnet sind.

4. Radkasten (4) eines Kraftfahrzeuges nach Anspruch 1 **dadurch gekennzeichnet, dass** an den Unterkanten (15, 15') des vorderen Ohres (12) und des hinteren Ohres (13) eine abnehmbare Abdeckung (19) angeordnet ist.

5. Radkasten (4) eines Kraftfahrzeuges nach Anspruch 1 **dadurch gekennzeichnet, dass** an den Unterkanten (15, 15') des vorderen Ohres (12) und des hinteren Ohres (13) ein schnabelförmiger Ausläufer (20) angeordnet ist, der Bestandteil der unteren Abdeckung (3) des Motorraumes (1) ist.

## Claims

1. A wheelhouse (4) of a motor vehicle, which is arranged on both sides of an engine compartment (1) with a lower cover (3) of the engine compartment (1), wherein the wheelhouse (4) consists of a wheel shell (9) and a side wall (10) and in the side wall (10) a section (11) is formed, which connects the engine compartment (1) with the wheelhouse (4), **characterized in that** on the section (11) with the width (B) a projecting front ear (12) as well as a rear ear (13) with the length (L) are arranged, which have an advantageous quadrangular form with an upper edge (14) and a lower edge (15), wherein the ratio of the length (L) to the width (B) is L ≥ 0.2B.

2. A wheelhouse (4) of a motor vehicle according to Claim 1, **characterized in that** the upper edge (14, 14') of the front ear (12) and the rear ear (13) are connected with a roofing (16).

3. A wheelhouse (4) of a motor vehicle according to Claim 1, **characterized in that** horizontal panels (17) with a gap (18) between them are arranged on the lower edges (15, 15') of the front ear (12) and the rear ear (13).

4. A wheelhouse (4) of a motor vehicle according to Claim 1, **characterized in that** a removable cover (19) is arranged on the lower edges (15, 15') of the front ear (12) and of the rear ear (13).

5. A wheelhouse (4) of the motor vehicle according to Claim 1, **characterized in that** on the lower edges (15, 15') of the front ear (12) and the rear ear (13) a beak-shaped extension (20) is arranged, which is a component of the lower cover (3) of the engine compartment (1).

## Revendications

1. Passage de roue (4) d'un véhicule automobile, qui est disposé des deux côtés d'un compartiment moteur (1) avec un recouvrement inférieur (3) du compartiment moteur (1), le passage de roue (4) étant constitué d'une coque de roue (9) et d'une paroi latérale (10), et une découpe (11) qui relie le compartiment moteur (1) au passage de roue (4) étant formée dans la paroi latérale (10), **caractérisé en ce qu'**une patte avant (12) de largeur (B) faisant saillie vers l'extérieur ainsi qu'une patte arrière (13) de longueur (L) sont disposées au niveau de la découpe (11), lesdites pattes ayant avantageusement une forme rectangulaire avec un bord supérieur (14) et un bord inférieur (15), le rapport de la longueur (L) sur la largeur (B) étant L ≥ 0,2B.

2. Passage de roue (4) d'un véhicule automobile selon la revendication 1, **caractérisé en ce que** les bords supérieurs (14, 14') de la patte avant (12) et de la patte arrière (13) sont reliés à une plaque de couverture (16).

3. Passage de roue (4) d'un véhicule automobile selon la revendication 1, **caractérisé en ce que** des obturateurs horizontaux (17) avec une fente (18) entre eux sont disposés sur les bords inférieur (15, 15') de la patte avant (12) et de la patte arrière (13).

4. Passage de roue (4) d'un véhicule automobile selon la revendication 1, **caractérisé en ce qu'**un recouvrement amovible (19) est disposé sur les bords inférieurs (15, 15') de la patte avant (12) et de la patte arrière (13).

5. Passage de roue (4) d'un véhicule automobile selon la revendication 1, **caractérisé en ce qu'**un prolongement en forme de bec (20) est disposé sur les bords inférieurs (15, 15') de la patte avant (12) et de la patte arrière (13) et fait partie intégrante du recouvrement inférieur (3) du compartiment moteur (1).
